# EUROPEAN PATENT APPLICATION

(11) **EP 1 990 325 A1**
(43) Date of publication of application: **12.11.2008**
(21) Application number: 07290580.5
(22) Date of filing: 09.05.2007
(51) Int. Cl.: C04B 24/16, C04B 24/26, C04B 28/14, C08F 2/06

(54) **Water-resistant gypsum boards**

(71) Applicant: LAFARGE PLATRES, 84915 Avignon Cedex (FR)
(72) Inventor: Boisvert, Jean-Philippe, 69110 Saint Foy les Lyon (FR); Thouilleux, Philippe, 38080 L'Isle d'Abeau (FR)
(74) Representative: Mérigeault, Shona

(57) **Abstract**

The invention pertains to a water-resistant gypsum board comprising a gypsum core and at least one facer, wherein the gypsum core comprises a latex copolymer and wherein the latex copolymer comprises:
- a primary monomer having the formula (I): 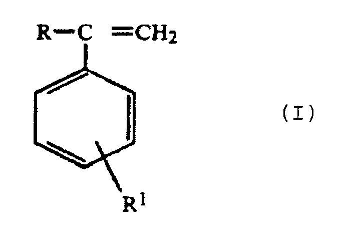 wherein R is hydrogen or a C1-C4 alkyl and R¹ is hydrogen, halo or C1-C4 alkyl;
- a secondary monomer, wherein said secondary monomer is an acrylic, allylic or vinylic derivative; and
- a tertiary monomer, wherein said tertiary monomer is a sulfonate monomer.

The invention also relates to a method of making water-resistant gypsum boards.

## Description

### TECHNICAL FIELD

The present invention relates to a water-resistant gypsum board as well as to a method of making same.

### TECHNICAL BACKGROUND

Numerous strategies are known from the prior art for rendering gypsum boards waterproof.

For example US 5,702,828 discloses a process for waterproofing gypsum materials comprising adding a dispersion powder of polymers to a gypsum powder. The dispersion powder could be for example styrene-acrylic polymers and used in association with one or more thixotropic additives.

US 3,869,415 discloses a plaster composition comprising a resin (for example a styrene and acrylic polymer).

WO 00/63294 discloses a water-repelling composition comprising a wax and a styrene (meth)acrylic polymer. This composition can be used for instance for making gypsum wallboard.

However, the mechanical properties of the gypsum boards produced according to the prior art are still unsatisfactory when these gypsum boards are used in wet conditions.

In particular, there is a need for water-resistant gypsum boards having an improved compressive strength after a prolonged contact with water.

### SUMMARY OF THE INVENTION

A first object of the invention is to provide a water-resistant gypsum board comprising a gypsum core and at least one facer, wherein the gypsum core comprises a latex copolymer and wherein the latex copolymer comprises:
- a primary monomer having the formula (I): 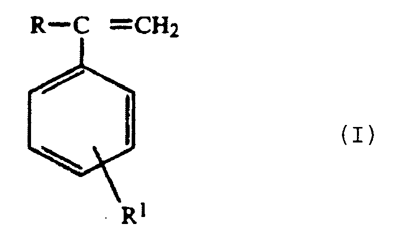 wherein R is hydrogen or a C1-C4 alkyl and R¹ is hydrogen, halo or C1-C4 alkyl;
- a secondary monomer, wherein said secondary monomer is an acrylic, allylic or vinylic derivative; and
- a tertiary monomer, wherein said tertiary monomer is a sulfonate monomer.

According to an embodiment, R is hydrogen and R¹ is hydrogen.

According to an embodiment, the secondary monomer is selected from the group consisting of acrylate allyl esters, methacrylate allyl esters, C1-C8 acrylate, acrylic acid, methacrylic acid, ter-butyl acrylate, ter-butyl methacrylate, acrylamide, methacrylamide, acrylamide methyl propyl sulfonic acid sodium salt, and mixtures thereof, and is most preferably 2-ethyl hexyl acrylate.

According to an embodiment, the tertiary monomer is derived from the primary monomer or the secondary monomer and is preferably a styrene sulfonic sodium salt.

According to an embodiment, the tertiary monomer-to-(primary monomer plus secondary monomer) molar ratio is from 5:95 to 12:88.

According to an embodiment, primary monomer-to-secondary monomer molar ratio is from 65:35 to 85:15.

According to an embodiment, the latex copolymer has a number average molecular weight comprised between 20,000 and 100,000.

According to an embodiment, the gypsum core comprises calcium sulfate dihydrate and the latex copolymer is present in a weight content of from 1 to 4% relative to the calcium sulfate dihydrate weight.

Another object of the invention is to provide a method of making a water-resistant gypsum board comprising the steps of:
a) making a latex copolymer by a process of copolymerization, comprising the substep of mixing:
   - a primary monomer having the formula (I): 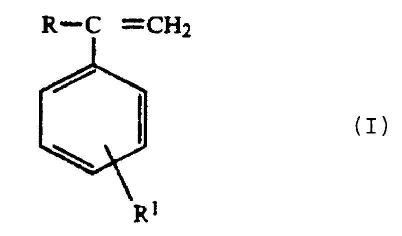 wherein R is hydrogen or a C1-C4 alkyl and R¹ is hydrogen, halo or C1-C4 alkyl;
   - a secondary monomer, wherein said secondary monomer is an acrylic, allylic or vinylic derivative; together with
   - water as a solvent and alcohol as a co-solvent;
b) mixing hydratable calcium sulfate together with water and the latex copolymer.

According to an embodiment, the latex copolymer is as defined above.

According to an embodiment, the latex copolymer is added to the mixing water prior to adding the mixing water to the hydratable calcium sulfate.

According to an embodiment, the alcohol is a C1-C4 alcohol, preferably a C2-C3 alcohol, most preferably ethanol or isopropanol.

According to an embodiment, the solvent to co-solvent ratio is from 1:6 to 20:1, preferably from 1:4 to 15:1, more preferably from 1:2 to 10:1.

According to an embodiment:
- a polymerization initiator, preferably ammonium persulfate, and / or
- a transfer agent, preferably dodecyl mercaptan, and / or
- a surfactant, preferably sodium dodecyl sulfate,
are used during the process of copolymerization.

According to an embodiment, the abovementioned method comprises a step of drying the board and evaporating alcohol with water.

According to an embodiment, the latex copolymer is added as an emulsion, the active dry weight content of polymer in the emulsion being comprised between 20 and 35%.

According to an embodiment, the latex copolymer is present in the form of particles with a DV50 comprised between 40 and 300 nm, preferably between 45 and 250 nm, most preferably between 50 and 200 nm.

According to an embodiment, the weight of latex copolymer is from 1 to 4% relative to the weight of hydratable calcium sulfate.

The present invention overcomes the inconveniences of the prior art. In particular the invention provides water-resistant gypsum boards having a better compressive strength after a prolonged contact with water (in particular after a two-hour immersion in water) relative to prior art water-resistant gypsum boards.

Without wishing to be bound by any theory, it is the Applicant's opinion that this is achieved via the formation of a novel three-dimensional hydrophobic latex network in the gypsum matrix.

According to particular embodiments, the invention also has the following advantageous features:
- The water uptake of the gypsum boards is reduced in comparison with the prior art.
- The compressive strength of the gypsum boards in the dry state is increased in comparison with the prior art.

### DESCRIPTION OF EMBODIMENTS

The invention will now be described in more detail without limitation in the following description.

### Water-resistance

The term "water-resistant" gypsum boards refers to gypsum boards which absorb less than about 10%, preferably less than about 7.5%, most preferably less than about 5%, and especially less than about 3% water when tested in accordance with ASTM method C-473. In another embodiment, the same ranges of values apply when tested in accordance with standard EN 520 (method depicted in section 5.9.2).

The core composition comprises a common set "plaster" or gypsum. These terms should be understood to mean, in the present description, the product resulting from the hydraulic setting and the hardening of hydratable calcium sulfate, that is to say anhydrous calcium sulfate (anhydrite II or III) or hemi-hydrated calcium sulfate (CaSO₄·½H₂O) in its α or β crystalline form. These compounds are well known to those skilled in the art. β hemihydrate is a preferred choice of calcium sulfate. The gypsum may also comprise other hydraulic binders in low amounts. The core density can be from about 700 kg/m³ to about 1000 kg/m³, especially from about 750 kg/m³ to about 950 kg/m³. Typically the core density is about 850 kg/m³.

The core additionally comprises a latex copolymer as described below.

### Method of manufacturing a water-resistant gypsum board

Briefly, the method for manufacturing a gypsum board typically comprises the following steps:
- preparation of a plaster slurry by mixing the various constituents of the composition with water in a mixer;
- deposition of the prepared slurry (which will form the gypsum core) on at least one facer, followed by the shaping and the covering of the upper face of the slurry using a second facer;
- where appropriate, shaping of the edges of the board obtained previously by molding the fresh plaster on profiled bands, this shaping creates a feathered edge of the board;
- hydraulic setting of the hydratable calcium sulfate on a manufacturing line while the ribbon of hydratable calcium sulfate board runs along a conveyor belt;
- cutting of the ribbon at the end of the line into predetermined lengths; and
- drying of the boards obtained.

The board may comprise a second facer, the two facers being most preferably identical. They may consist of sheets of paper, glass matting or any material known to the person skilled in the art as being able to be used as a facing.

A more detailed implementation of this method is well-known by those skilled in the art.

The preferred water-to-plaster ratio is from 0.6 to 0.8.

According to the present invention, a copolymer latex is provided in the gypsum core. Preferably, it is added to the water prior to mixing the other constituents with this water.

The latex copolymer is preferably formulated as an emulsion, with particles of latex preferably having a DV50 comprised between 50 and 300 nm, the active dry weight content of copolymer in the emulsion being preferably between 20 and 35%. The weight of added latex copolymer is preferably from 1 to 4% relative to the hydratable calcium sulfate weight.

In the method of manufacturing a water-resistant gypsum board according to the invention, the latex copolymer is prepared by a copolymerization process, which copolymerization process comprises the step of mixing:
- a primary monomer having the following formula (I): 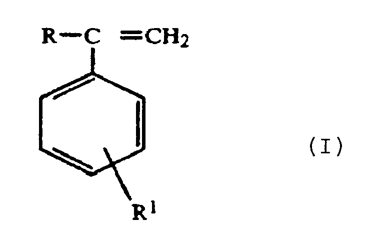 wherein R is hydrogen or C₁-C₄ alkyl and R¹ is hydrogen, halo or C₁-C₄ alkyl;
- a secondary monomer which can be an acrylic, allylic or vinylic derivative; together with
- water as a solvent and alcohol as a co-solvent.

The primary monomer may also be replaced by a combination of different monomers having the formula (I) above. According to a preferred embodiment, R is H and R¹ is H. In this case, the primary monomer is styrene.

The secondary monomer may for example chosen from acrylate and methacrylate allyl ester such as C1 to C8 acrylate, 2-ethyl hexyl acrylate (2-EHA), acrylic acid and methacrylic acid, ter-butyl acrylate and methacrylate, acrylamide and methacrylamide, Acrylamido Methyl Propyl Sulfonic acid Sodium salt (AMPS), etc. The secondary monomer may also be replaced by a combination of the above monomers. Most preferably, the secondary monomer will be 2-EHA.

Optionally, the latex copolymer may comprise a tertiary monomer, preferably a sulfonate monomer. The tertiary monomer is then R²-SO₃⁻ or a salt thereof, wherein R² is an organic group. For example, the tertiary monomer can be a monomer having the general formula (I) described in relation with the primary monomer, where R¹ is SO₃Na and R is H. In this case the tertiary monomer is styrene sulfonic acid sodium salt (NaSS). The tertiary monomer can also be derived from the secondary monomer, for example AMPS. Combinations of different tertiary monomers are also possible.

Monomers may be partly or fully neutralized.

The molar concentration of the tertiary monomer (when present) can be from 0.5% to 20%, preferably 2% to 15%, most preferably 5% to 12% relative to the total content of all monomers.

The molar ratio of primary monomer-to-secondary monomer in the mixture can be from 95:5 to 40:60, preferably 90:10 to 50:50, most preferably 85:15 to 65:35. According to a preferred embodiment, this corresponds to a styrene/2EHA ratio.

The monomer composition can be a mixture of the primary monomer and the secondary monomer. It can also contain the tertiary monomer with the primary monomer and the secondary monomer.

According to a preferred embodiment, the copolymer comprises styrene, 2EHA and NaSS as monomers.

The monomers can be mixed together with the solvent and co-solvent before starting the copolymerization or during the addition to the reactor (i.e. during the reaction), or they may be added separately to the reactor during the copolymerization.

The copolymer described in this invention may be prepared by radical copolymerization of monomers from different groups into a latex copolymer wherein the copolymer is formed and the particles are suspended in an aqueous solution. The water is the main solvent and alcohol is used as a co-solvent. A surfactant may optionally be present together with the solvent/co-solvent.

The solvent/co-solvent (and optionally the surfactant) may be heated before the addition of the monomers and of an optional transfer agent. Finally a polymerization initiator may be added and stirring may be performed until the copolymerization reaction is complete.

The reaction may be initiated by the polymerization initiator which gives free radicals by thermal decomposition. An optional transfer agent is used to control the molecular weight. An optional surfactant is used to stabilize the polymer particles formed during the copolymerization.

After copolymerization, a milky liquid called "latex" is obtained. The small particles of copolymer are dispersed and stabilized in the aqueous reacted dispersion.

The use of alcohol as a co-solvent is advantageous for obtaining latex copolymers with particular physicochemical properties, so that the resulting gypsum boards unexpectedly exhibit better compressive wet strength and lower water uptake than similar boards comprising copolymers formulated without alcohol.

The copolymer concentration in the solvent/co-solvent when the reaction is finished is generally from 5% to 50%, preferably 10% to 45%, most preferably 15% to 40%.

The alcohol can be a C1-C4 alcohol, preferably a C2-C3 alcohol, most preferably ethanol or isopropyl alcohol. Combinations of several alcohols can also be used. The water to alcohol ratio can be from 1:6 to 20:1, preferably from 1:4 to 15:1, most preferably from 1:2 to 10:1.

The alcohol or a mixture of alcohol/water may be optionally or partially removed from the reacted dispersion, under vacuum or by heating or stripping (or by a combination of these methods) during the reaction or after the reaction is terminated. In any case water can also be added into the reacted dispersion during or after the evaporation of the alcohol.

The invention also relates to the water-resistant gypsum boards obtained or obtainable through the method described above.

Other specific embodiments of said method are illustrated below by further describing the process of copolymerization.

### Process of copolymerization

A surfactant may be used in order to stabilize the latex and obtain a copolymer with a specific particle size. It may also be used to influence the hydrophobic/hydrophilic characteristic of the copolymer.

However, preparing the copolymer latex without any surfactant may be advantageous for reducing the water uptake of the water-resistant gypsum boards.

The person skilled in the art of latex synthesis will know the specific anionic or non-ionic surfactants that are available and result in stable dispersions.

By way of example, anionic surfactant(s) which can be used are alkyl sulfate, alkyl ether sulfate, alkyl sulfonate, alkyl phosphate, and derivatives or combinations.

Non ionic surfactant(s) which can be used are ethoxylated alcohol, fatty acid ester, amine and amide derivatives, ethylene oxide/propylene oxide polymers, polyalcohol and ethoxylated polyacohol, thiol and derivatives or combinations.

One useful mixture of surfactants can be sodium alkyl sulfate and sodium dodecyl sulfate (SDS). The SDS concentration can be from 0% to 1.0% preferably from 0% to 0.5%, most preferably from 0.05% to 0.2%% relative to the total liquid weight. The surfactant can be added to the solvent or mixed with the monomers, or added separately during the copolymerization reaction.

A transfer agent may be used in order to limit the length of the copolymer chains and thus to limit the average molecular weight. Its nature also influences the hydrophobic/hydrophilic characteristic of the copolymer. Transfer agents can be hydrophilic or hydrophobic.

Examples of useful transfer agents are a C3-C16 mercaptan (hydrophobic) or mercaptoethanol or thioglycolic acid (hydrophilic), preferably C8-C12 mercaptan, most preferably dodecyl mercaptan.

One commonly used transfer agent is dodecyl mercaptan which can be used in a concentration from 0.05% to 1.0% preferably from 0.1% to 0.8%, most preferably from 0.20% to 0.60% of the weight of the reaction monomers.

The transfer agent can be added either to the solvent or to the monomer mixture before the copolymerization reaction starts.

A polymerization initiator may be used in order to provide free radicals which contribute to the copolymerization. It also influences the hydrophobic/hydrophilic characteristic of the copolymer.

Useful polymerization initiators can be an oxydizer/reducer pair such as bromate/sulfite, peroxide/sulfur dioxide, etc. It can also be a product that gives free radicals by thermal decomposition such as: peroxides and azoics.

Good results are also obtained with ammonium persulfate (APS), azobisisobutyronitrile (AIBN), 2,2'-azobis-2,4-dimethyl pentane nitrile (VAZO52) and 2,2'-azobis-2-methylpropionamidine dihydrochloride (V50).

One commonly used initiator is APS which can be used in a concentration from 0.02% to 2.00%, preferably from 0.05% to 1.0%, most preferably from 0.10% to 0.50% by weight of the total monomer addition.

The polymerization initiator can be either mixed into the solvent or pre-mixed with the monomers, or added separately during reaction.

Use may be made of a vessel with temperature-controlled water circulation fitted with a water cooled condenser, a stirrer and a nitrogen inlet.

Copolymerization can be completed by a standard batch method wherein all the components are introduced in a reaction vessel before starting the reaction: the vessel is filled with water and/or co-solvent, the monomers, and the other components of the formulation (i.e. surfactant(s), transfer agent, etc.). It is preferable to conduct the copolymerization process in the substantial absence of oxygen. The vessel may thus be closed and the enclosed emulsion may be stirred and sparged with nitrogen for at least 30 minutes while it is heated before the reaction is initiated.

When the desired temperature is attained (i.e. temperature for decomposition of the polymerization initiator, when present), the initiator should be added to the emulsion. This temperature is typically from 40 to 100°C, preferably 55 to 95°C, most preferably 70 to 90°C. After 2 to 10 hours of stirring at constant temperature, the copolymerization reaction is completed. The reacted dispersion is continuously stirred and cooled to 20°C over the next 4 hours. This method is known as the "batch polymerization method".

Alternatively, the latex may be prepared by the semi continuous or continuous copolymerization method. In this method the monomers and some components are added to the solvent during the entire period of the chain propagating reaction.

Both methods can be modified by evaporating the co-solvent (alcohol) during or after the reaction. These reactions may also be modified by adding water to the reaction medium during the reaction period.

The pH of the polymer solution can be adjusted during or after the reaction. A suitable final pH is typically 6.5-7.5 for handling considerations.

The average molecular weight number of the copolymer is preferably between 10,000 and 500,000, preferably between 15,000 and 300,000, most preferably between 20,000 and 100,000.

The mean particle size (Dv50) of the latex is preferably between 40 and 300 nm, more preferably between 45 and 250 nm, most preferably between 50 and 200 nm.

The glass transition temperature of the copolymer is advantageously between 10 and 50°C, more advantageously between 20 and 40°C.

The copolymer obtained is not water-soluble by itself. The copolymer particles are dispersed in water and stabilized by the charges available at the surface of the particles. The copolymer is thus in the form of an emulsion or latex.

### Water-resistant gypsum boards

Another subject of the invention is a water-resistant gypsum board comprising a gypsum core and at least one facer, wherein the gypsum core comprises a latex copolymer and wherein the latex copolymer comprises:
- a primary monomer having the formula (I): 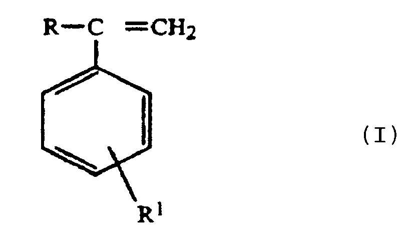 wherein R is hydrogen or a C1-C4 alkyl and R¹ is hydrogen, halo or C1-C4 alkyl;
- a secondary monomer, wherein said secondary monomer is an acrylic, allylic or vinylic derivative; and
- a sulfonate monomer as tertiary monomer.

According to preferred embodiments, the latex copolymer is as described above in relation with the method of making water-resistant gypsum boards. The latex copolymer is also obtainable through the copolymerization process described above.

The board additionally comprises one, or preferably two, facer(s), the two facers being most preferably identical. They may consist of sheets of paper, glass matting or any material known to the person skilled in the art as being able to be used as a facing.

The invention also provides water-resistant gypsum boards comprising a latex copolymer, wherein the ratio of the compressive strength of the water-resistant gypsum board after a two-hour immersion in water to the compressive strength of another gypsum board after a two-hour immersion in water, is greater than 1.2, preferably greater than 1.5, more preferably greater than 1.8, most preferably greater than 2. This other gypsum board comprises the same ingredients in the same amounts as the water-resistant gypsum board at the exclusion of the latex copolymer and being prepared in the same way as the water-resistant gypsum board. In the above definition, the compressive strength after a two-hour immersion may be measured according to the protocol described in example 3. For example, said water-resistant gypsum boards may comprise a latex copolymer based on the three monomers described above. Alternatively, these water-resistant gypsum boards may be produced according to the method of the invention (with a step of mixing the above primary monomer, the above secondary monomer and optionally the above tertiary monomer with water as a solvent and alcohol as a co-solvent).

### Use of other additives

All the additives described in this section may be present in the water-resistant gypsum boards of the invention and may be added in the method of making water-resistant gypsum boards according to the invention.

The core may comprise water-resistance additives (in addition to the abovementioned latex copolymer) and also preferably, although this is not necessary, fire-resistant additives.

Any known water-resistance additive is suitable for use in the invention.

Examples of materials which have been reported as being effective for improving the water-resistant properties of gypsum products are the following: poly(vinyl alcohol), with or without a minor amount of poly(vinyl acetate); metallic resinates; wax or asphalt or mixtures thereof; a mixture of wax and/or asphalt and also cornflower and potassium permanganate; water insoluble thermoplastic organic materials such as petroleum and natural asphalt, coal tar, and thermoplastic synthetic resins such as poly(vinyl acetate), poly(vinyl chloride) and a polymer of vinyl acetate and vinyl chloride and acrylic resins; a mixture of metal rosin soap, a water soluble alkaline earth metal salt, and residual fuel oil; a mixture of petroleum wax in the form of an emulsion and either residual fuel oil, pine tar or coal tar; a mixture comprising residual fuel oil and rosin; aromatic isocyanates and diisocyanates; silicone derivatives, e.g. organohydrogenpolysiloxanes or silicone oils; clay particles (preferably ones with OH functions) coated with polysiloxane as disclosed in WO 00/47536; a wax-asphalt emulsion with or without such materials as potassium sulfate, alkali and alkaline earth aluminates, and Portland cement; a wax-asphalt emulsion prepared by adding to a blend of molten wax and asphalt an oil-soluble, water-dispersible emulsifying agent, and admixing the aforementioned with a solution of casein which contains, as a dispersing agent, an alkali sulfonate of a polyarylmethylene condensation product.

The amounts of water-resistant additives may vary between broad ranges depending on the type of additives, and can be from about 0.05 wt% to about 5 wt%, preferably 0,5 wt% to 3 wt%. Reference weight is the total weight of the core material.

Alternatively, the core composition may not contain a secondary water-resistant additive, except the abovementioned latex copolymer.

Any known fire-resistant additive is suitable for use in the invention.

In applications where fire-resistant properties are considered important, the core of the gypsum board includes preferably one or more additives which improve the ability of the set gypsum composition to maintain its integrity when subjected to the heat of fire. Examples of these materials include mineral fibers such as, for example, glass fibers (e.g. chopped glass fibers), basalt fibers and calcium sulfate whisker fibers. A mixture of one or more of such fibers can be used. Other exemplary materials which are known for use in conventional fire resistant gypsum board are unexpanded vermiculite, clay, colloidal silica and colloidal alumina. Typically, mineral fibers, and particularly glass fibers, and mineral filler such as clay or vermiculite, are used.

The amount of fire-resistant material included in the core is generally from about 0.03 wt% to about 10 wt%, depending on the type of material that is used. For mineral filler such as clay or vermiculite, the amount is generally from 2wt% to 10wt%. Reference weight is the total weight of the core material. The amount of glass fibers included in the core is generally from about 0.1% to 1%. In general, the amount of these additives will be such that the board used in a standard system achieves a fire rating of at least about one hour when tested according to ASTM E-119. Alternatively, the amount of these additives will be such that the board achieves a one hour fire resistance when tested according to ASTM C36-95 (§4.2).

The core composition may comprise further known additives, such as anti-mould, biocide, etc. It should be understood that any additive classically used in the art could also be used in the instant core.

These additives are those influencing the behavior of the slurry like retarders/accelerators but not limited to them and additives influencing the behavior of the final product like biocides but not limited to them. The range of additives is very wide as will be appreciated by the skilled man. Resins for the improvement of the mechanical and/or aesthetic properties, known in the art can be added. Repetition retarders and accelerators can also be used in the invention. Foaming agent is also commonly used in most plasterboards in order to obtain the rather light density (700 to 1000 kg/m3). A bubble stabilizing agent can also be used. These additives are typically thickeners which make bubbles more durable. Examples are guar gums, xanthan gums, ethyl- or methylcellulose, starch, gelatin, and the like. A water-soluble viscosity modifier can also be used. These may be similar to bubble stabilizers, but in different concentration in order to achieve a viscosity change in the whole slurry. Starch is also used in a classical manner, especially to improve the binding at the interface core/mat. Because the instant boards of the invention are likely to be used in a water (e.g. wet or moist) environment, a fungicide and/biocide will also be added in a conventional manner, so as to avoid mould and algae.

Lastly, lime is one additive that is useful to increase the wet resistance of the core. The concentration of this additive is also well known in the art. The lime amount will generally be less than 0.5%, preferably less than 0.2% (typically more than 0.05%).

In one embodiment, the further additives will comprise fibers, preferably facer or paper fibers, most preferably from recycling.

### Uses of the water-resistant boards

The boards of the invention have numerous useful properties. In one embodiment, the boards withstand wet conditions, and fire conditions as well. Even more notably, these boards retain mechanical properties in wet conditions.

The boards can be used in a variety of applications, both indoors and outdoors. A use in wet areas is particularly relevant in view of the properties of the boards.

Examples of indoor applications include, shaft wall assemblies, support for ceramic tile as well as partitions and ceilings in wet area rooms.

A gypsum board as described herein can be used to particular advantage as a component of a partition or shaft wall assembly or similar assembly in the interior of a building. Assemblies of this type generally comprise metal or wood framework or studs for support of the gypsum panels which form the partitions in bathrooms and other wet or humid areas, the walls of the shafts of elevators, stairwells and the like. The water-resistant gypsum boards, as described herein, can be used, for example, as the shaft liner panel. For use in such application, the core of the board can include fire resistant additives.

One may refer to US 4,047,355 for details on a shaft wall assembly.

The instant boards can also be used with advantage in air ducts, in a manner similar to WO 02/06605.

The instant boards can also perform well as a support for ceramic tile in bathrooms or kitchens.

The usual construction of bathroom walls includes a ceramic tiles adhered to an underlying base member, for example, a panel of gypsum board of the invention. Such a panel is referred to in the industry as a "tile backing board," or "tile backer". In usual fashion, sheets of tile backer are fastened by rust-resistant nails or screws to studs. The board joints and screw heads are then treated in a conventional manner with a water-resistant compound before the surface is finished, for example, by paint or ceramic tiles. Wall-to-wall and floor-to-wall joints may be treated additionally with conventional sealants or corking compounds before the surface is finished.

Pieces of ceramic tiles are adhered to the sheets of tile backer by water-resistant adhesive (e.g. "mastic") or by a Portland cement-based adhesive (e.g. "setting mortar"), the latter case being mostly for floor applications. Thereafter, spaces between the tiles and between the tiles and other adjoining surfaces are filled with a water-resistant material (the "grouting").

The instant boards will also be useful in any application for partitions and ceilings in wet area rooms. Also, the boards of the invention can be used in any application for which wall boards are known to be useful, including drywall.

Examples of outdoor application include, roof deck systems and EIS (Exterior Insulating Systems) and EFS (Exterior Finishing Systems). These systems will be disclosed in more details below.

A typical roof deck system incorporating the gypsum boards of the invention is as follows. In this construction, spaced parallel trusses extending between building support members support usually a (corrugated) metal deck which is fastened to the trusses. Layers of insulating sheet material (e.g. expanded polystyrene) are disposed on the corrugated metal deck. A gypsum board of the invention is secured to the corrugated deck by means of fasteners. The joints of the boards are sealed in a conventional way by application of tape. Overlying the gypsum board is a waterproof roofing membrane. Typically this membrane comprises alternate layers of asphalt and roofing felt. A final coating of asphalt may be covered with a topping layer.

One may refer to US 4,783,942, for details on a roof deck system.

An EIS system typically comprises insulating material which is sandwiched between an underlying support surface and an exterior finishing material which can be an integral part of the insulating material, but which is usually applied to the insulating material at the site of installation. From one EIS system to the next, there exist variations in structural details and components. For example, although the exterior finishing material may be affixed directly to the insulating material, various systems include a reinforcing component sandwiched between the exterior finishing material and the insulating material. The reinforcing component comprises generally one or more plies of fiber glass reinforcing fabric or mesh which is adhered by suitable mastic to the surface of the insulating material. In some systems, the support surface is affixed to a wooden frame attached to the exterior surface of the outside wall of a building, whereas in other systems a metal frame is used. In certain applications, the support surface may be affixed directly to the exterior surface of an outside wall, for example, one comprising cinder blocks or concrete blocks. The adhesive or mastic for adhering together components of the system tends to vary from one system to the next, and are known. They typically comprise specially formulated proprietary compositions. Mechanically fastened insulation is also suitable. The improved support surface of the present invention can be used satisfactorily and to good advantage in EIS systems which include overlying plies of insulating and exterior finishing materials, and other optional components. The insulating material is generally substantially free of channels penetrating therethrough.

One useful insulating material in EIS systems is expanded or foamed polystyrene, a material which has good moisture resistant properties. Although it has desirably low water vapor transmission, it is not a vapor barrier, but instead is capable of breathing. Rigid panels of expanded polystyrene are used most widely in EIS systems. Such panels have satisfactory compressive strength and resilience and are presently available in varying thicknesses and lengths.

Other thermal insulating materials can be used in EIS systems also. Examples of such materials include extruded polystyrene, polyurethane, polyisocyanurate, cement-based insulating plasters, and phenolic foam. Insulating materials generally have low thermal conductivity and low density.

As mentioned above, various EIS systems include a reinforcing component, for example, in cloth form, sandwiched between the insulating material and the exterior finishing material. Glass cloth can be used in a conventional manner to reinforce the system, that is, to improve the impact strength of the system. The particular type or types of glass cloth used and the number of plies thereof which are used depend on the impact resistance which is desired. Examples of reinforcing cloth or fabric which can be used in the system are woven glass, glass fiber scrim and glass fiber mesh. A coating can be applied on the reinforcing cloth or fabric to protect from alkali attack in the adhesive. Installation of the reinforcing fabric generally involves applying a suitable adhesive to the surface of the insulating material and then applying the fabric thereto. Additional plies of fabric can be applied if desired. A cement/acrylic resin is an example of an adhesive that can be used.

The exterior finishing material can be affixed directly to the insulating material or to an intermediate surface such as, for example, the surface of a reinforcing member as described above. The exterior finishing material has weathering characteristics and is preferably appealing in appearance. Generally, an exterior finish that can be used is a conventional dry product that is mixed with water and then which is spread or troweled on the underlying substrate. Alternatively, one may use an acrylic resin-based composition which is available in a paste-type form. After application, the resin sets to form a tough, weather-resistant solid material which adheres tightly to the underlying substrate. Such resin compositions are available commercially in a variety of colors. They usually include aggregate which can vary in size. This allows the applicator to choose a particular composition which permits him to apply a finish that can vary in texture from fine to coarse. Examples of other materials that can be used as an exterior finish are Portland cement mortars which may include sand and larger aggregate.

The exterior finish can vary in thickness over a wide range, as is known in the art, with a coating or layer thickness of about 2 to 6 mm being exemplary.

Different systems may have a different number of layers applied in the system. One typical example is the following in commercial applications: steel studs, building wrap (like Tyvek^{®}), gypsum board, trowel on adhesive, EPS insulation, trowel on Portland cement-based adhesive, glass scrim reinforcement, "brown" support coat of Portland cement-based adhesive, and finally a color coat of Portland cement based mortar or a coat of paint.

The gypsum board of the present invention can be used also to good advantage in place of conventional gypsum sheathing in applications other than EIS systems, i.e. these systems having no insulating material. Thus, the board can be used as an underlying support surface which is covered with overlying finishing materials, for example, aluminum, wood siding, plaster and Portland cement.

Numerous advantages flow from the use of the present invention. The improved water resistance gives the applicator greater flexibility in selecting adhesives that can be used to apply insulation directly to the faced surface of the gypsum support element as adverse affects are not encountered by the use of water-based adhesives. The facer of the gypsum support element is "nailable", and accordingly, it can be secured readily to an underlying frame or other substrate by nailing. The improved support surface of the present invention has improved rigidity and strength uniformity in both the length and width dimensions of the system. The preferred embodiment of the invention which includes the use of a water-resistant core provides a substantially improved weather-resistant product which better resists degradation both within and outside of the system.

One may refer to US 4,647,496, US 5,319,900 and US 5,552,187, for details on Exterior Insulating Systems and Exterior Finishing systems.

### EXAMPLES

The following examples illustrate the invention without limiting it.

### Example 1 - latex copolymers

A latex copolymer which may be used in the context of the present invention is homemade copolymer PT188. It was prepared as follows.

The following ingredients were weighed: 70.70 g of styrene monomers (MW=104.1, commercialized by Fluka); 41.70 g of 2-ethyl hexyl acrylate monomers (MW=184.3, commercialized by Aldrich); 12.62 g of sodium styrene sulfonate (MW=206.2, commercialized by Aldrich); 0.496 g of SDS (at 96% active weight, commercialized by Fluka); 1.540 g of ammonium persulfate (at 98% active weight, commercialized by Aldrich); 0.497 g of dodecyl mercaptan (commercialized by Aldrich); 45.3 g of isopropanol (commercialized by Prolabo); and 328.0 g of water.

The water was added to a reactor. The surfactant was then added to the reactor, together with the alcohol, and the mixture was agitated so as to dissolve the surfactant. The sodium styrene sulfonate was added to the reactor and the mixture was agitated until dissolution. The reaction vessel was closed, sparged with N₂ for 20 minutes and heated to 70°C. In the meanwhile, the styrene and the 2-EHA were weighed in a glass beaker. The transfer agent (dodecyl mercaptan) was weighed in a syringe. The syringe was emptied into the beaker with the styrene and 2-EHA and the components in the beaker were mixed. Once the reactor had reached the required temperature, the beaker was emptied into the reactor. The polymerization initiator (ammonium persulfate) was weighed and pre-dissolved in 50 ml of additional water. 10 minutes after emptying the beaker into the reactor, the initiator was added to the reactor. The reaction was conducted for 4 hours under constant stirring. Samples were taken to follow the reaction in progress. After 4 hours, stirring was continued and the reactor was allowed to cool. The copolymer was transferred to a container with an airtight closure. It can be stored at room temperature for up to 2 years. The copolymer latex has to be agitated before use.

### Example 2 - preparation of miniboards (0.1 m² samples)

Liner preparation: the wallboard liner was cut 350 mm wide and 658 mm long in the cross direction with a razor knife. The outer side of the liner was creased to make a sharp fold at 11.5 mm from each cross direction end of the liner. Rubber cement glue was applied to the creased sections. The creased ends were folded perpendicularly to the field between the creases. The liner was bent along the short dimension; the two glued surfaces were aligned and affixed to make a 350 mm long tube. The tube was formed around a board and the glued joint was pressed against the forming board to make a uniform smooth closed joint. The lower end of the tube was closed with tape and the liner was placed in a support that allowed the upper end of the tube to remain open.

In the preparation of the core materials: any dry additives were weighed into the gypsum stucco. The dry materials were homogenized in a Hobart mixer with a wire whisk at slow speed and foam was optionally generated with the pre-selected foaming agent. Any liquid additives were weighed into a bowl; water was added with the optional Potash to the liquid additives and stirred with a spatula until the mixture was uniform.

In the making of mini-board: the water and liquid additives were poured into the Hobart mixer bowl with the stucco and dry additives, the mixer was started to make a uniform mixture and the mixer was stopped. The optional foam was added into the water and stucco slurry. The Hobart mixer was started to combine the foam and the mixer was stopped. The wire whisk and the bowl were dismounted from the Hobart mixer base. The contents were directly poured into the bottom of the open liner and the support was closed to make the thickness 13 mm. The excess was removed from the top of the liner to leave a flat surface.

Mini-board finishing: Gilmore set was measured in the upper surface of the mini-board core. After Gilmore initial set, the mini-board was carefully removed from the support. The wet mini-board was cut into a 316 mm by 316 mm square with a razor knife with uniform 13 mm thickness. The mini-board was allowed to achieve Gilmore final set. Drying was then performed in hot air, at less than 100°C, until the board achieved a stable weight. The mini-board was conditioned at 23°C and 50% RH for 24 hours before measuring mechanical properties.

### Example 3 - testing of the miniboards

The water uptake after 2 hours and the compressive strength after a 2-hour immersion in water were measured for various miniboards prepared with different plaster slurry compositions.

The water uptake was measured by simply weighing the miniboards before and after immersion in water according to ASTM C473.

The compressive strength measurement protocol was the following:
- the miniboards were removed from the curing cabinet;
- a 50 mm square sample was cut from an area 100 mm from the edges with a rotating or reciprocating saw;
- the sample was weighed and all three dimensions were measured so as to calculate the density of the sample;
- the sample was centered between clean 70 mm parallel plates of a 25 kN press with graphic load displacement display;
- the load cell at the surface of the sample was zeroed;
- the compressive strength was tested at a constant displacement of 4 mm/min until the slope of the increasing load on the display changed;
- the force value of the first point after the slope change was identified;
- the compressive strength was calculated from the following equation: Force × 10⁻⁶ / (Length × Width) = compressive strength in mPa. Force is in Newtons, and dimensions are in meters.

The wet compressive strength measurement was made by the above method after a two-hour soaking under water at room temperature. The sample was removed from the water, and the excess water was removed from the surface.

The composition of the various mixes used is presented in Table 1.

Samples 1 and 2 were reference samples without copolymer.

Source of hydratable Calcium Sulfate: originating from the Ottmarsheim factory.

Latex concentration: 1.5% active weight / weight of hydratable Calcium Sulfate.

Paper: SAPB crème.

W/P: water-to-plaster weight ratio.

**Table 1: composition of the various mixes used**

| Mix | Plaster g/m² | W/P | Type of copolymer | Polymer g/m² |
|---|---|---|---|---|
| 1 | 9800 | 0.72 | - | 0 |
| 2 | 8697 | 1.00 | - | 0 |
| 6 | 10213 | 0.72 | PT188 | 613 |
| 7 | 8495 | 1.00 | PT188 | 510 |

The experimental results are presented below in Table 2. Since the compressive strength is highly dependent on the dry density, comparisons should only be made between mini-boards having similar dry densities, i.e. control board made with mix No.2 should be compared with board No.7 and control board No.1 should be compared with board No.6. The compressive strength of the boards made according to the invention is improved relative to that of the control boards, even when the dry density is slightly less (see board No.2 vs. board No.7). The water uptake is considerably reduced in the boards according to the invention.

**Table 2: experimental results**

| Mix | Dry density | Water uptake (%) | Wet strength (Mpa) |
|---|---|---|---|
| 2 | 0.85 | 57.6 | 2.03 |
| 7 | 0.84 | 7.5 | 3.8 |
| 1 | 0.94 | 45.0 | 3.36 |
| 6 | 1.00 | 4.4 | 7.14 |

## Claims

1. A water-resistant gypsum board comprising a gypsum core and at least one facer, wherein the gypsum core comprises a latex copolymer and wherein the latex copolymer comprises:
- a primary monomer having the formula (I): 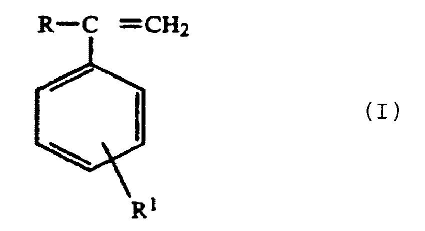 wherein R is hydrogen or a C1-C4 alkyl and R¹ is hydrogen, halo or C1-C4 alkyl;
- a secondary monomer, wherein said secondary monomer is an acrylic, allylic or vinylic derivative; and
- a tertiary monomer, wherein said tertiary monomer is a sulfonate monomer.

2. The water-resistant gypsum board of claim 1, wherein R is hydrogen and R¹ is hydrogen.

3. The water-resistant gypsum board of claim 1 or 2, wherein the secondary monomer is selected from the group consisting of acrylate allyl esters, methacrylate allyl esters, C1-C8 acrylate, acrylic acid, methacrylic acid, ter-butyl acrylate, ter-butyl methacrylate, acrylamide, methacrylamide, acrylamide methyl propyl sulfonic acid sodium salt, and mixtures thereof, and is most preferably 2-ethyl hexyl acrylate.

4. The water-resistant gypsum board of one of claims 1 to 3, wherein the tertiary monomer is derived from the primary monomer or the secondary monomer and is preferably a styrene sulfonic sodium salt.

5. The water-resistant gypsum board of one of claims 1 to 4, wherein the tertiary monomer-to-(primary monomer plus secondary monomer) molar ratio is from 5:95 to 12:88.

6. The water-resistant gypsum board of one of claims 1 to 5, wherein the primary monomer-to-secondary monomer molar ratio is from 65:35 to 85:15.

7. The water-resistant gypsum board of one of claims 1 to 6, wherein the latex copolymer has a number average molecular weight comprised between 20,000 and 100,000.

8. The water-resistant gypsum board of one of claims 1 to 7, wherein the gypsum core comprises calcium sulfate dihydrate and the latex copolymer is present in a weight content of from 1 to 4% relative to the calcium sulfate dihydrate weight.

9. A method of making a water-resistant gypsum board comprising the steps of:
a) making a latex copolymer by a process of copolymerization, comprising the substep of mixing:
• a primary monomer having the formula (I): 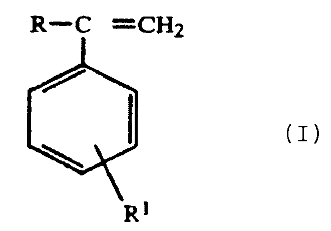 wherein R is hydrogen or a C1-C4 alkyl and R¹ is hydrogen, halo or C1-C4 alkyl;
• a secondary monomer, wherein said secondary monomer is an acrylic, allylic or vinylic derivative; together with
• water as a solvent and alcohol as a co-solvent;
b) mixing hydratable calcium sulfate together with water and the latex copolymer.

10. The method of claim 9, wherein the latex copolymer is as defined in one of claims 1 to 8.

11. The method of claim 9 or 10, wherein the latex copolymer is added to the mixing water prior to adding the mixing water to the hydratable calcium sulfate.

12. The method of one of claims 9 to 11, wherein the alcohol is a C1-C4 alcohol, preferably a C2-C3 alcohol, most preferably ethanol or isopropanol.

13. The method of one of claims 9 to 12, wherein the solvent to co-solvent ratio is from 1:6 to 20:1, preferably from 1:4 to 15:1, more preferably from 1:2 to 10:1.

14. The method of one of claims 9 to 13, wherein:
- a polymerization initiator, preferably ammonium persulfate, and / or
- a transfer agent, preferably dodecyl mercaptan, and / or
- a surfactant, preferably sodium dodecyl sulfate,
are used during the process of copolymerization.

15. The method of one of claims 9 to 14, comprising a step of drying the board and evaporating alcohol with water.

16. The method of one of claims 9 to 15, wherein the latex copolymer is added as an emulsion, the active dry weight content of polymer in the emulsion being comprised between 20 and 35%.

17. The method of one of claims 9 to 16, wherein the latex copolymer is present in the form of particles with a DV50 comprised between 40 and 300 nm, preferably between 45 and 250 nm, most preferably between 50 and 200 nm.

18. The method of one of claims 9 to 17, wherein the weight of latex copolymer is from 1 to 4% relative to the weight of hydratable calcium sulfate.
